(19) Europäisches Patentamt
European Patent Office
Office européen des brevets

(11) Publication number: 0 303 360 A1

(12) # EUROPEAN PATENT APPLICATION

(21) Application number: 88306489.1

(51) Int. Cl.[4]: H01B 1/12

(22) Date of filing: 15.07.88

(30) Priority: 22.07.87 GB 8717359

(43) Date of publication of application: 15.02.89 Bulletin 89/07

(84) Designated Contracting States: AT BE CH DE ES FR GB GR IT LI LU NL SE

(71) Applicant: COOKSON GROUP plc
14 Gresham Street
London EC2V 7AT(GB)

(72) Inventor: Kathirgamanathan, Poopathy
14 Sandhurst Avenue, North Harrow
Middlesex HA2 7AP(GB)
Inventor: Quill, Kieren
6 Shamrock Park
Douglas, Cork(IE)
Inventor: Underhill, Alan Edward
Meiford, 46 Ffriddoedd Road
Bangor, Gwynedd LL57 2TW(GB)

(74) Representative: Allard, Susan Joyce et al
BOULT, WADE & TENNANT 27 Furnival Street
London EC4A 1PQ(GB)

(54) **Electroconductive polymers.**

(57) Substituted polyaniline derivatives which comprise repeating units of the general formula:

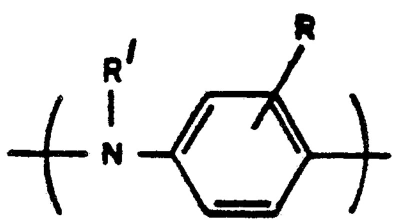

where R and R′ are certain specified substituent groups, and counterions of the formula X, where X is, for example Cl⁻, Br⁻, arylsulphonate etc. The substituted polyanilines are electroconductive.

EP 0 303 360 A1

## ELECTROCONDUCTIVE POLYMERS

The present invention relates to certain substituted aniline polymers and to their production. In particular, the present invention relates to substituted polyanilines which are electroconductive.

Polymers of aniline have been known for many years, thus more than a century ago it was reported in Journal of the Chemical Society, 15, 161 (1862), that the final product of the anodic oxidation of aniline in aqueous sulphuric acid solution at a platinum electrode was a dark green precipitate which was termed "aniline black" by subsequent workers in the field. Similar results were also obtained for the anodic oxidation of hydrochloric acid solutions of aniline. The chemical oxidative polymerization of aniline with either $H_2O_2$ or $VCl_3$ was reported in Journal of the Chemical Society, 101, 1117 (1912). The principal product of this chemical polymerization/oxidation is a linear octamer which is known as emeraldine.

We have now found that certain substituted anilines can be polymerised to produce polymers which possess improved properties with regard to their processibility and/or electroconductive properties as compared to the prior art aniline polymers.

Accordingly, the present invention provides a substituted polyaniline derivative which comprises repeating units of the general formula:

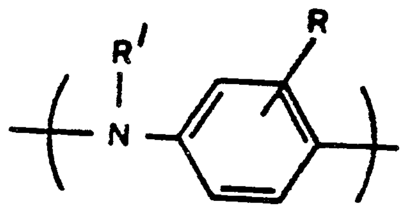 (I)

where R is in the ortho- or meta-position and is $-(CH_2)_mO(CHR''CH_2)_nOR'''$ where m is 0 or an integer of from 1 to 6, n is an integer of from 1 to 6, R″ is a hydrogen atom or a methyl group and R‴ is an alkyl group containing from 1 to 6 carbon atoms, or the group

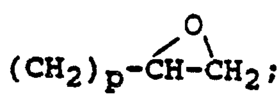

where p is 0 or an integer of from 1 to 6, R′ is hydrogen, $C_{1-6}$ alkyl or aryl, and counterions of the formula X, where X is $Cl^-$, $Br^-$, $SO_4^=$, $BF_4^-$, $PF_6^-$, $H_2PO_3^-$, $H_2PO_4^-$, arylsulphonate, arenedicarboxylate, arenecarboxylate, polystyrene sulphonate, polyacrylate, alkylsulphonate, vinylsulphonate, vinylbenzene sulphonate, cellulose sulphonate, cellulose sulphate or a perfluorinated polyanion.

Examples of arylsulphonates are p-toluenesulphonate, benzenesulphonate, 9,10-anthraquinonesulphonate and anthracenesulphonate, an example of an arenedicarboxylate is phthalate, whilst an example of an arenecarboxylate is benzoate.

Particularly preferred polyaniline derivatives of the invention are those given below

| Repeating Unit | Counterion | |
|---|---|---|
| 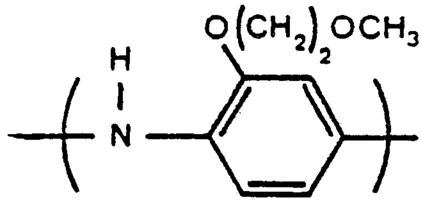 | $Cl^-$ | (II) |
| 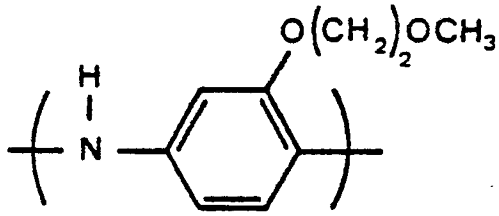 | $Cl^-$ | (III) |
| 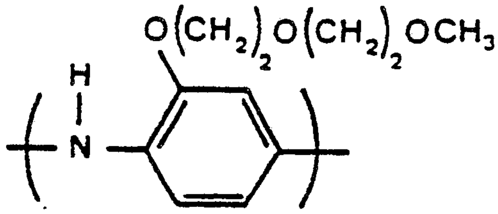 | $Cl^-$ | (IV) |
| 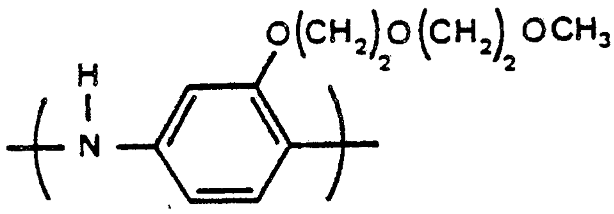 | $Cl^-$ | (V) |

The polyaniline derivatives of the invention are conductive and are therefore useful in thin film technology, as EMI/RF shielding materials, as antistatic materials, in electrochromic display systems, as ion and pH sensors, as battery electrode materials, as protective coatings for electrodes and as electrodes for the selective deposition of metal ions.

Certain of the polyaniline derivatives of the invention are soluble in common organic solvents and therefore can be appropriately cast onto objects made of an inert material such as glass, plastic and wood.

Furthermore, solutions of the solvent soluble polymers can be sprayed onto a non-conducting surface which will then become conductive on evaporation of the solvent therefrom. The resulting film has very good antistatic properties and this technique may be used to produce antistatic coatings on decorative objects.

The present invention also includes within its scope a blend of a polyaniline derivative as above defined

with another polymer.

The polymer with which the polyaniline derivative is blended may be, for example, poly(vinyl choride), polyethylene, polypropylene, polystyrene, nylon, poly(acrylonitrile-butadiene-styrene), poly(ethylene terephthalate) or poly(ethylene oxide). The blend will generally comprise from 5 to 70% by weight of the polyaniline derivative and from 95 to 30% by weight of the other polymer.

These blends have good conductivities and good antistatic properties. Furthermore, the polyaniline derivatives impart the required electrical property to the blend immediately and, unlike alkylammonium salts, do not need moisture to impart conductivity to the polymer.

Conductive adhesives may be formulated using the polyaniline derivatives of the present invention.

The polyaniline derivatives of the present invention may also be directly deposited electrolessly or electrochemically onto and/or impregnated into a porous polymer film such as poly(vinyl chloride). The surface of the components soformed is permanently conductive and has good antistatic properties. This surface may be painted with coloured dyes or pigments and the colour modified without impairing the antistatic properties. This method enables antistatic floors and mats to be fabricated from the composites.

Furthermore, non-conductors such as talc and mica may be coated with the polyaniline derivatives of the invention either electrolessly or electrochemically. The coated powders are useful as fillers for the formation of conductive polymer composites. These coated minerals are described in our co-pending Patent Application No. 88306224.2 filed 7th July, 1988.

The polyaniline derivatives of the present invention may be prepared by oxidising the aniline monomer with an oxidant which has a higher oxidation potential than the aniline either in the presence of an acid HX to provide the counterions, or with the sequential addition of an acid HX to the oxidised monomer in order to provide the counterions. The reaction is preferably carried out in aqueous solution.

The concentration of oxidant is preferably in the range of from 0.5 to 3 times the concentration of the aniline monomer. The concentration of the acid HX is preferably in the range of from 0.5 to 4 molar. The reaction is preferably carried out at a temperature of below 40 °C, more preferably at a temperature in the range of from 0 to 40 °C.

Suitable oxidants are ammonium persulphate, potassium dichromate, hydrogen peroxide and sodium chlorate.

The polymers of the present invention may also be prepared electrochemically under a variety of conditions. The electrodes at which polymerisation occurs are normally made from platinum, graphite, tungsten, titanium, niobium, nickel, lead or indium-tin oxide.

The anions for the electrochemical polymerisation are any of the counterions defined in relation to X.

The electrochemical polymerisation may be carried out in a solvent such as acetonitrile, dichloromethane, chloroform, nitromethane, nitrobenzene, propylene carbonate, dichloroethane, N-methylpyrrolidone, sulpholane, dimethylformamide, dimethylsulphoxide or trichlorobenzene, or a mixture of two or more thereof. The polymerization in a solvent is preferably carried out in the presence of a proton abstractor, such as pyridine. Alternatively, the electrochemical polymerization may be carried out in aqueous medium, preferably aqueous acidic medium, although neutral or basic conditions may also be used.

The monomers which are used in the present invention are substituted anilines of the general formula: where R and R′ are as above defined. Preferred anilines of Formula VI are o- and m- methoxyethoxyaniline and o- and m- methoxyethoxyethoxyaniline.

The substituted aniline monomers may also be co-polymerized with other monomers, for example with aniline, with another substituted aniline as defined herein or with any other monomer with which it will co-polymerise. These copolymers are also included within the scope of the present invention.

Figure 1 of the accompanying drawings is a repetitive cyclic voltammogram showing the polymer growth of the polymer of Example 6 on potential recycling.

The present invention will be further described with reference to the following Examples. Preparation Examples 1 to 5 relate to the preparation of the aniline starting monomers.

## PREPARATION 1

### Preparation of o-methoxyethoxyaniline

(A) Preparation of o-methoxyethoxynitrobenzene

A mixture of o-nitrophenol (0.16 mol), 2-bromoethyl methyl ether (0.18 mol), anhydrous potassium carbonate (22.6 g) and dry acetone (100 ml) was refluxed for 3 days. The acetone was distilled from the reaction mixture to yield a yellow oily mixture containing a solid material.

Water (100 ml) was added to this mixture to dissolve the solid and the organic layer was extracted with benzene (3 x 50 ml). The combined extracts were washed with 10% sodium hydroxide (3 x 100 ml) and a light yellow oil, o-methoxyethoxynitrobenzene, was recovered by evaporation of the benzene.

(B) Preparation of o-methoxyethoxyaniline

o-Methoxyethoxynitrobenzene (9.9g) was mixed with granulated tin (14.9g) in a 250 ml round bottomed flask and concentrated hydrochloric acid (50 ml) was added in small portions thereto. A waxy, almost colourless, solid was formed during the process. The mixture was heated to reflux and all the solid dissolved to give a clear solution. The refluxing was continued for 14 hours. At the end of this period the solution was cooled, treated with 20% aqueous sodium hydroxide (2 fold excess with respect to hydrochloric acid) and extracted with diethyl ether.

The diethyl ether solution was washed with deionised water and dried for 2 days with anhydrous sodium sulphate. Evaporation of the diethyl ether on a rotary evaporator yielded light red oily o-methoxyethoxyaniline.

PREPARATION 2

Preparation of m-methoxyethoxyaniline

The procedure of Example 1 was repeated but using m-nitrophenol as the starting material in stage A.

PREPARATION 3

Preparation of o-methoxyethoxyethoxyaniline

(A) Preparation of o-methoxyethoxyethoxynitrobenzene

A mixture of o-nitrophenol (0.05 mol), 1-bromo-2-(2-methoxyethoxy)ethane (0.055 mol), anhydrous potassium carbonate (0.05 mol) and dry acetone (100 ml) was refluxed for 3 days. The acetone was distilled from the reaction mixture to yield a yellow oily mixture containing a solid material.

Water (100 ml) was added to this mixture to dissolve the solid and the organic layer was extracted with benzene (3 x 50 ml). The combined extracts were washed with 10% sodium hydroxide (3 x 100 ml) and a light yellow oil, o-methoxyethoxyethoxynitrobenzene, was recovered by evaporation of the benzene.

(B) Preparation of o-methoxyethoxyethoxyaniline

1) Reduction with Tin

o-Methoxyethoxyethoxynitrobenzene (6g) was mixed with granulated tin (9g) in a 250 ml round bottomed flask and the temperature was maintained at about 5°C by immersion in a cold water bath. Concentrated hydrochloric acid (30 ml) was added in small portions thereto. A waxy, almost colourless, solid was formed during this process. After completion of this addition of concentrated hydrochloric acid the mixture was refluxed for 14 hours. Subsequently, the cooled solution was treated with 20% aqueous sodium hydroxide (2 fold excess with respect to hydrochloric acid), resulting in the precipitation of a white solid. An almost colourless oil separated from the aqueous layer. This oil was extracted with diethyl ether, the solution was washed with water and dried for 2 days over anhydrous sodium sulphate. The ether was removed by evaporation to yield 2.6 g of a clear light red oil of o-methoxyethoxyethoxyaniline.

2) Reduction with Sodium Borohydride/Palladium-Charcoal

A suspension of palladium-charcoal (10% palladium, 0.25g) in methanol/water (25 ml, 3:1 by volume) was placed in a round bottom flask and sodium borohydride (1.95 g) in 40 ml of the same solvent mixture was added thereto. The system was stirred magnetically and maintained under a nitrogen atmosphere; o-methoxyethoxyethoxynitrobenzene (6 g) was added dropwise to the mixture over a period of 15 minutes. The temperature of the reaction mixture rose to 40°C with concomitant vigorous evolution of hydrogen. The mixture was stirred until the solution had cooled to room temperature and then filtered to give a red solution. The solution was evaporated at 40°C in a rotary evaporator to give a red oily liquid and a white solid. The oil was extracted with several portions of diethyl ether, the ether phase then washed with water and dried over anhydrous sodium sulphate.

Evaporation of the diethyl ether yielded 3.6 g of a red oil, o-methoxyethoxyethoxyaniline.

PREPARATION 4

Preparation of m-methoxyethoxyethoxyaniline

The procedure of preparation 3 was repeated but using m-nitrophenol as the starting material in stage A.

PREPARATION 5

Preparation of butoxyethoxyethoxyethoxyethoxyaniline

A. Preparation of butoxyethoxyethoxyethoxyethanol

A mixture of tetraethylene glycol (485 ml), sodium hydroxide (10g) and water (20 ml) was heated under reflux for 1 hour, and then butyl chloride (23g) was added and the mixture heated at 95°C under reflux condition for 17 hours. The mixture was cooled, extracted with ether (1.5 litres), concentrated and the residue dissolved in a methanol/water (3:1, 150 ml) mixture and washed with n-pentane. The solution was concentrated, dissolved in water (250 ml), extracted with ether (5 x 100 ml), dried over magnesium sulphate and finally concentrated to yield a pale yellow oil (13.4 g) which was butoxyethoxyethoxyethoxyethanol.

B. Preparation of butoxyethoxyethoxyethoxyethyl bromide

To a stirred solution of $PBr_3$ (3.9g) in dichloromethane (~3 ml) at 0 °C under nitrogen was added $Br_2$ - (2.1g) in dichloromethane (3 ml) followed by the addition of butoxyethoxyethoxyethoxyethanol (3 g) in dichloromethane (5 ml). The mixture was stirred at 0 °C for 1 hour, allowed to warm to room temperature over 2 hours, diluted with iced brine, extracted with ether, washed with sodium hydrogen carbonate ($NaHCO_3$, 10% solution), dried over magnesium sulphate and concentrated to yield a yellow oil.

The mixture was purified by flash chromatography (1:1 petrol/ether, silica) to yield 1.5g of butoxyethoxyethoxyethoxyethyl bromide.

C. Preparation of o-(butoxyethoxyethoxyethoxyethoxy)nitrobenzene

A mixture of butoxyethoxyethoxyethoxyethyl bromide (1g, 3.2 mmoles), 2-nitrophenol (0.44g, 3.2 mmoles) and potassium carbonate (0.3 g, 3.2 mmoles) in dry acetone (~10 ml) was heated under reflux for 40 hours. The mixture was concentrated, diluted with water (15 ml) and extracted with ether (5 x 20 ml), washed with 10% sodium hydroxide (10 ml), dried over magnesium sulphate and concentrated to yield a yellow oil which was purified by flash chromatography (silica, ether) to yield a clear oil which was o-(butoxyethoxyethoxyethoxyethoxy)nitrobenzene.

D. Preparation of o-butoxyethoxyethoxyethoxyethoxyaniline

To a stirred suspension of Pd/C (10%, 0.04 g) in methanol (3 ml) water (1 ml) was added. A solution of sodium borohydride (0.3g) in methanol and water (5 ml), followed by a solution of o-(butoxyethoxyethoxyethoxyethoxy)nitrobenzene (0.7 g) in methanol (2 ml) was added thereto. The mixture was stirred for 1 hour, filtered, concentrated, extracted with ethyl acetate, washed with 10% sodium hydroxide, dried over magnesium sulphate and concentrated to yield an orange oil (0.61g) which was o-butoxyethoxyethoxyethoxyethoxyaniline.

This was purified by flash chromatography (silica, ether) to yield a clear pale - yellow liquid (0.5g).

EXAMPLE 1

Synthesis of poly(m-methoxyethoxyaniline) chloride

The synthesis of poly(m-methoxyethoxyaniline) chloride under various conditions is given in Table 1 below.

TABLE 1

| Conditions | $\sigma$ volume S $cm^{-1}$ | Comments |
|---|---|---|
| Monomer $6 \times 10^{-3}$ mol in 50 ml, 1M hydrochloric acid, $(NH_4)_2S_2O_8$ $9 \times 10^{-3}$ mol in 10 ml of 1M hydrochloric acid | - | brown solid |
| Monomer $9.8 \times 10^{-3}$ mol in 1M hydrochloric acid, $K_2Cr_2O_7$ $4.9 \times 10^{-3}$ mol. | $4.8 \times 10^{-7}$ | dark brown solid |

EXAMPLE 2

Synthesis of poly(o-methoxyethoxyethoxyaniline)chloride

A clear light yellow solution of o-methoxyethoxyethoxyaniline (0.5g, 2.4 x $10^{-3}$ mol) in 2M hydrochloric acid (25 ml) was treated dropwise at room temperature with aqueous ammonium persulphate (0.81g, 3.6 x $10^{-3}$ mol in 5 ml of 1M hydrochloric acid). On stirring the mixture for $1\frac{1}{2}$ hours, the solution darkened to yield a red fine precipitate. After stirring for 24 hours, a dark red solid was collected, washed with 2M hydrochloric acid and dried at 45°C in a vacuum oven ($10^{-1}$ torr). $\sigma^{volume}$ 1.4 x $10^{-7}$ S $cm^{-1}$ (disc).

EXAMPLE 3

Synthesis of poly(m-methoxyethoxyethoxyaniline)chloride

Ammonium persulphate (1.6g) in 1M hydrochloric acid (10 ml) was added dropwise to a solution of m-methoxyethoxyethoxyaniline in 40 ml of 1M hydrochloric acid with vigorous stirring. The initially colourless solution darkened over several days and after 1 week the solution was filtered and the precipitate washed with 1M hydrochloric acid (50 ml) and dried at room temperature in a vacuum oven ($10^{-1}$ torr). The brown powder had a $\sigma^{volume}$ of 6.7 x $10^{-5}$ S $cm^{-1}$ (disc).

EXAMPLE 4

Synthesis of poly(m-methoxyethoxyethoxyaniline) p-toluenesulphonate

1.06g of m-methoxyethoxyethoxyaniline was added to a 20 ml solution of p-toluenesulphonic acid (1.90g) when a grey brown precipitate was formed. The addition of 1.14g of ammonium persulphate caused the solution to darken and the solution was left stirring for 5 days. A brown black powder was produced which was filtered, washed with water and dried in vacuo at 100°C for 12 hours. The shiny brown black powder obtained (0.162g) had a volume conductivity of 1.7 x $10^{-7}$ S $cm^{-1}$.

EXAMPLE 5

Electrochemical polymerisation of m-methoxyethoxyethoxyaniline

4 mmoles of m-methoxyethoxyethoxyaniline and 10 mmoles of methanesulphonic acid were dissolved in 40 ml of water and electrolysed using a platinum foil electrode at 2 mA $cm^{-2}$ for 12 hours. A chocolate colour film was obtained which had a volume conductivity of 3.5 x $10^{-5}$ S $cm^{-1}$.

EXAMPLE 6

Electrochemical polymerisation of o-methoxyethoxyethoxyaniline

A 50mM o-methoxyethoxyethoxyaniline solution in 0.5 M p-toluenesulphonic acid was cycled between 0 and 0.8V versus Ag/AgCl at a Pt electrode at 100 mV $s^{-1}$ for 1 hour. A light brown thin polymer film was obtained. The conductivity of the film was 1 x $10^{-4}$ S $cm^{-1}$.

The cyclic voltammogram of Figure 1 shows the growth of the o-methoxyethoxyethoxyaniline on potential cycling.

EXAMPLE 7

Electropolymerisation of o-butoxyethoxyethoxyethoxyethoxyaniline

0.25g of o-butoxyethoxyethoxyethoxyethoxyaniline was dissolved in 30 ml of a p-toluenesulphonic acid (1.0g) solution and electrolysed at a platinium foil electrode at a constant current density of 2.25 mA $cm^{-2}$. A copper coloured film was immediately formed and the electrolysis continued for a further 4 hours. The film was rinsed with deionised water and dried in vacuo at 100° C overnight. The film was then transferred on to a Sellotape film and the conductivity measurement was carried out. The volume conductivity of poly-(o-butoxyethoxyethoxyethoxyethoxyaniline) p-toluenesulphonate was 1.2 x $10^{-4}$ S $cm^{-1}$.

## Claims

1. A substituted polyaniline derivative which comprises repeating units of the general formula:

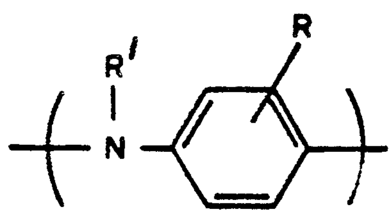

where R is in the ortho- or meta-position and is $-(CH_2)_mO(CHR''CH_2)_nOR'''$ where m is 0 or an integer of from 1 to 6, n is an integer of from 1 to 6, R″ is a hydrogen atom or a methyl group and R‴ is an alkyl group containing from 1 to 6 carbon atoms, or the group

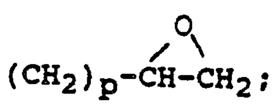

where p is 0 or an integer of from 1 to 6, R′ is hydrogen, $C_{1-6}$ alkyl or aryl, and counterions of the formula X, where X is $Cl^-$, $Br^-$, $SO_4^{=}$, $BF_4^-$, $PF_6^-$, $H_2PO_3^-$, $H_2PO_4^-$, arylsulphonate, arenedicarboxylate, arenecarboxylate, polystyrene sulphonate, polyacrylate, alkylsulphonate, vinylsulphonate, vinylbenzene sulphonate, cellulose sulphonate, cellulose sulphate or a perfluorinated polyanion.

2. A substituted aniline derivative as claimed in claim 1 which is selected from the following:

| Repeating Unit | Counterion | |
|---|---|---|
| 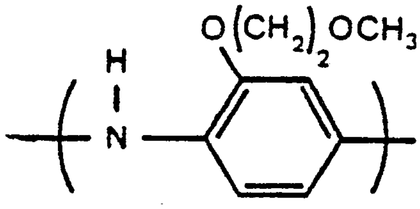 | $Cl^-$ | (II) |
| 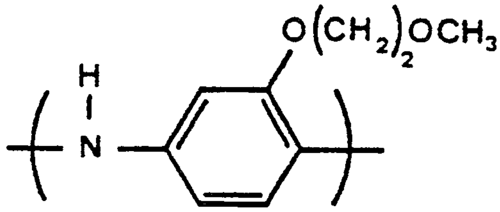 | $Cl^-$ | (III) |
| 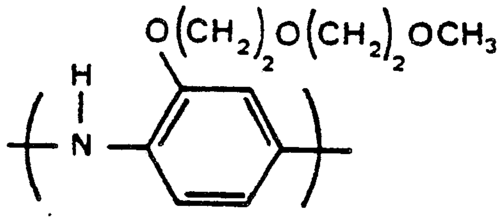 | $Cl^-$ | (IV) |
| 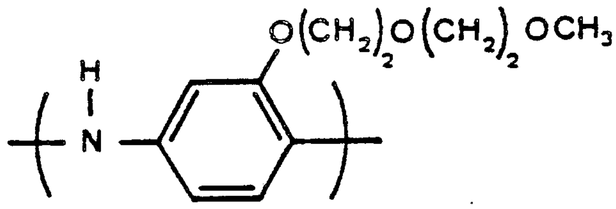 | $Cl^-$ | (V) |

3. A blend of a polymer with a polyaniline derivative as claimed in claim 1 or claim 2.

4. A blend as claimed in claim 3 wherein the polymer is poly(vinyl chloride), polyethylene, polypropylene, polystyrene, nylon, poly(ethylene terephthalate) or poly(ethylene oxide).

5. A blend as claimed in claim 3 or claim 4 which comprises from 5 to 70% by weight of the polyaniline derivative and from 95 to 30% by weight of the other polymer.

6. A process for the preparation of a polyaniline derivative as claimed in claim 1, which process comprises oxidising an aniline monomer of the formula:

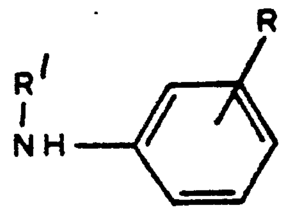

where R and R′ are as defined in claim 1 with an oxidant having a higher oxidation potential than the aniline, the reaction either being carried out in the presence of an acid HX were X is as defined in claim 1, or with the sequential addition of an acid HX to the oxidised monomer, in order to provide the counterions.

7. A process as claimed in claim 6 wherein the oxidant is ammonium persulphate, potassium dichromate, hydrogen peroxide or sodium chlorate.

8. A process as claimed in claim 6 or claim 7 wherein the oxidation is carried out at a temperature of below 40° C, preferably at a temperature in the range of from 0° to 40° C.

9. A process as claimed in any one of claims 6 to 8 wherein the concentration of oxidant is in the range of from 0.5 to 3 times the concentration of the aniline monomer.

10. the use of a polyaniline derivative as claimed in claim 1 or claim 2 as an EMI/RF shielding material, as an antistatic material, in an electrochromic display system, as an ion or pH sensor, as a battery electrode material, as a protective coating for an electrode or as an electrode for the selective deposition of metal ions.

11. A copolymer of a substituted aniline monomer of the general formula:

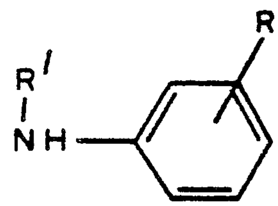

where R and R′ are as defined in claim 1, with another monomer.

12. A copolymer as claimed in claim 11 wherein the monomer is aniline or another substituted aniline as claimed in claim 1.

FIG. 1.

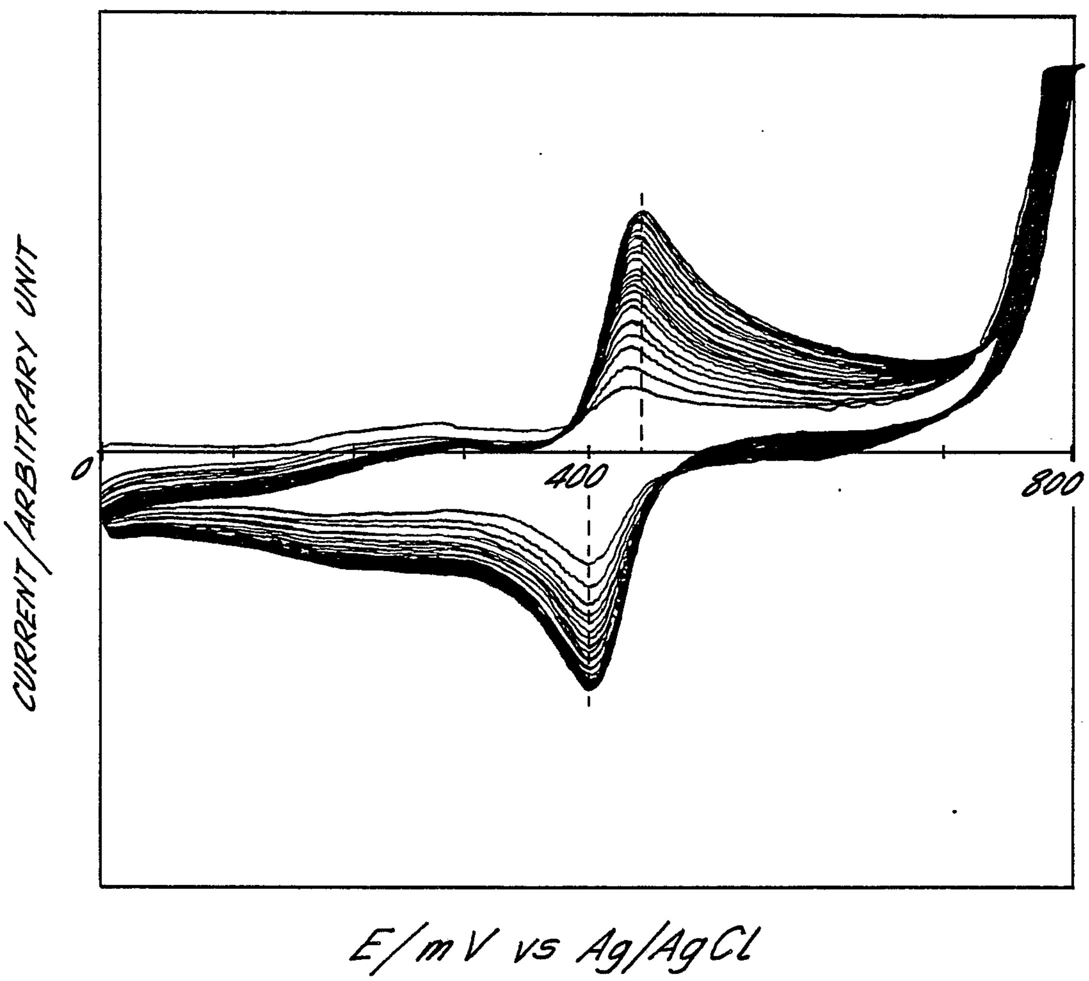


REPETITIVE CYCLIC VOLTAMMETRY OF O-METHOXYETHOXYETHOXY ANILINE (50 mM) IN P-TOLUENE SULPHONIC ACID (0.5 M) AT A PT ELECTRODE: SCAN RATE: 100 $mVs^{-1}$

European Patent Office

# EUROPEAN SEARCH REPORT

Application Number

EP 88 30 6489

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 208 254 (SHOWA DENKO)<br>* Whole document *<br>----- | 1,2,6,<br>10 | H 01 B 1/12 |
| | | | TECHNICAL FIELDS SEARCHED (Int. Cl.4) |
| | | | H 01 B |

The present search report has been drawn up for all claims

| Place of search | Date of completion of the search | Examiner |
|---|---|---|
| THE HAGUE | 18-11-1988 | DROUOT M.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document